# EUROPEAN PATENT SPECIFICATION

(11) **EP 1 797 766 B1**
(45) Date of publication and mention of the grant of the patent: **09.05.2012**
(21) Application number: 05772584.8
(22) Date of filing: 22.08.2005
(51) Int. Cl.: A23D 9/00, A23G 1/00, A23G 1/30

(54) **OILY FOOD AND PROCESS FOR PRODUCING THE SAME**
ÖLIGES NAHRUNGSMITTEL UND VERFAHREN ZUR SEINER HERSTELLUNG
ALIMENT GRAS ET SON PROCÉDÉ DE PRODUCTION

(30) Priority: 27.08.2004 JP 2004249239
(43) Date of publication of application: 20.06.2007
(73) Proprietor: Fuji Oil Company, Ltd., Osaka-shi, Osaka 542-0086 (JP)
(72) Inventor: OKOCHI, Masako, Fuji Oil Company, Limited, Tsukuba-gun, Ibaraki 3002436 (JP); MATSUI, Masayuki, Fuji Oil Company, Limited, Tsukuba-gun, Ibaraki 3002436 (JP); KOMAI, Hideki, Fuji Oil Company, Limited, Tsukuba-gun, Ibaraki 3002436 (JP)
(74) Representative: Hayes, Adrian Chetwynd
(86) International application number: PCT/JP2005/015182
(87) International publication number: WO 2006/022210

(56) References cited:
- EP-A- 0 285 422
- JP-A- 01 120 250
- JP-A- 05 211 837
- JP-A- 07 155 106
- JP-A- 08 294 361
- JP-A- 09 316 484
- JP-A- 61 209 545
- JP-A- 61 242 543
- JP-A- 63 248 343
- US-A- 5 069 915

## Description

### Technical Field

The present invention relates to an oily food which can lessen softening in chewing and increase in chewy texture like long-lasting sticky feel in the oral cavity, which are generated over a storage term, and can sustain hardness in chewing and favorable texture of meltability in mouth over a long period of time, and to which the above functions are imparted by a convenient process, and a process for producing the same.

### Background Art

Conventionally, oily foods, a representative of which is chocolate, have been becoming diversified as requested by the market accompanying recent diversification of various tastes.

Among them, in particular, a highly demanded oily food is that using fats and oils having a lower melting point than that of conventional fats and oils as its constituent fats and oils so as to attach great importance to meltability in mouth.

However, when meltability in mouth is improved simply by incorporating fats and oils having a lower melting point (hereinafter, referred to as triacylglycerols (TG's) when referring to a chemical composition of fats and oils since a main component of fat or oil is triacylglycerols), compatibility between the low melting point fats and oils and 1,3-dipalmitoyl-2-oleoylglycerin (hereinafter, referred to as POP), 1-palmitoyl-2-oleoyl-3-stearoylglycerin (hereinafter, referred to as POSt) and 1,3-distearoyl-2-oleoylglycerin (hereinafter, referred to as StOSt), which are symmetric TG's contained in cocoa butter in a large amount among originally incorporated fats and oils, is deteriorated. Then, StOSt, POSt and TsOSt which are symmetric TG's form coarse crystals using the low melting point TG's as a medium, thereby deteriorating hardness in chewing and favorable texture of meltability in mouth, which are the functions of products intended immediately after the production, with time. Thus, crispy snap feeling in chewing is lost, and products become soft and, as for meltability in mouth, texture like long-lasting sticky texture in the oral cavity (hereinafter, referred to as chewy) is generated, and is increased over time. Since this chewy texture of an oily food reduces greatly commercial value of an oily food, the market greatly demanded a technique for suppressing chewy feeling.

Conventionally, techniques for suppressing chewy feeling have been studied. For example, Patent Document 1 discloses a method for producing chocolate which hardly adheres to an oral cavity wall and is not heavy, and simple in texture by mixing and dispersing yolk lecithin in chocolate. Although this realizes simple meltability in mouth by improving dispersibility in an aqueous system (saliva) by addition of an emulsifier, the use of an emulsifier is essential. Moreover, this is a completely different solution of a chewy feeling problem caused by coarse crystals of symmetric TG's.

A method for preventing the formation of coarse crystals of fats and oils using an emulsifier has been known by, for example, Non-Patent Document 1. However, it also requires the use of an emulsifier.

Since the addition of a large amount of a food additive such as an emulsifier to a food not only deteriorates flavor of the food, but may also diminish a sense of safety in view of quality of the food and/or motivation to purchase it. In addition, as the amount of TG's having a low melting point to be added is increased, it is difficult to suppress the formation of coarse crystals due to an emulsifier.

For example, Patent Document 2 discloses a method for producing chocolate which is soft in chewing and has sharp meltability in mouth by using fats and oils having a TG composition and a solid fat content (SFC) satisfying certain specific conditions. However, since the method requires the specific conditions of a TG composition of fats and oils, it can not be said to be a general purpose method, and the document is silent on the preventing function of coarse crystal formation with time.
Patent Document 1: JP 08-294361 A (pages 1-6)
Patent Document 2: JP 63-248343 A (pages 1-6)
Non-Patent Document 1: "Polyglycerin Ester" (edited and published by Sakamoto Yakuhin Kogyo Co., Ltd. on October 3, 1994, pages 119-126)

### Disclosure of the Invention

### Problems to be solved by the Invention

An object of the present invention is to develop an oily food which can lessen softening in chewing and increase in chewy texture, which can sustain hardness in chewing and favorable texture of meltability in mouth over a long period of time, and to which the above functions have been imparted by a convenient process, and a process for producing the same.

### Means for Solving the Problems

In order to achieve the above object, the present inventors have studied intensively. As a result, they have found that, by adjusting POP and StOO (wherein St represents (stearic acid, having 18 carbon atoms) in a composition of fats and oils (hereinafter referred to as a fat-and-oil composition) in an oily food to a specified incorporation ratio, an oily food which can lessen softening in chewing and increase in chewy texture, and can sustain hardness in chewing and better texture of meltability in mouth over a long period of time can be produced by a convenient process. Thus, the present invention has been completed.

That is, the present invention is (1) an oily food having such a fat-and-oil composition that POP + StOO its 30% by weight or more, and StOO is 3% by weight or more based on total fats and oils contained in the food, whose StOO/POP weight ratio is 0.5 or less; (2) the oily food according to (1), wherein the oily food is chocolate or a fat-and-oil utilizing food; and (3) a process for producing the oily food according to (1), which comprises replacing a part or all of fats and oils in the food with fats and oils comprising 98 to 60% by weight of fat-and-oil (a) which contains 65% by weight or more of POP component, and 2 to 40% by weight of fat-and-oil (b) which contains 45% by weight or more of StOO component.

### Effect of the Invention

The present invention is advantageous because it is possible to produce an oily food which can lessen softening in chewing and increase in chewy texture like long-lasting sticky texture in the oral cavity, can sustain hardness in chewing and favorable texture of meltability in mouth over a long period of time, and to which the above functions are imparted by a convenient process.

### Brief Description of the Drawings

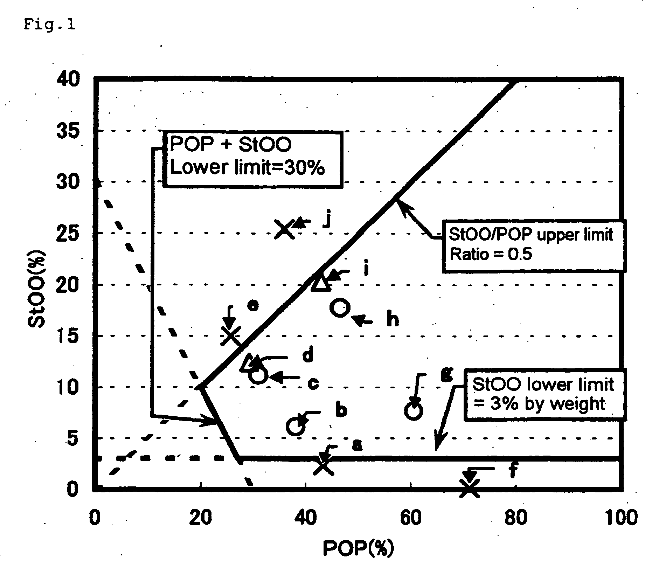

Fig.1 is a graph illustrating positions corresponding to claimed scope of the present invention, and to Comparative Example 1, Example 1, Example 2, Example 3, Comparative Example 2, Comparative Example 3, Example 4, Example 5, Example 6 and Comparative Example 4, when POP is placed on an x axis, and StOO is placed on a Y axis.

### Explanation of Symbols

a. Comparative Example 1, b. Example 1, c. Example 2, d. Example 3, e. Comparative Example 2, f. Comparative Example 3, g. Example 4, h. Example 5, i. Example 6, j. Comparative Example 4.

### Best Mode for Carrying out the Invention

Hereinafter, the present invention will be explained in more detail. The oily food referred to in the present invention is not particularly limited as far as it is a food in which fats and oils constitute a continuous phase, and examples thereof include chocolate and a chocolate-like food.

As far as a fat-and-oil composition of the oily food of the present invention is such that POP+StOO is 30% by weight or more, StOO is 3% by weight or more, preferably 5% by weight or more based on a total amount of fats and oils contained in the food, and StOO/POP is 0.5 or less, preferably 0.45 or less, origins of fats and oils are not particularly limited. However, in general, fats and oils rich in POP and fats and oils rich in StOO are mixed.

In order to attain the POP and StOO contents as defined above in a system of fats and oils containing a large amount of symmetric TG's, for example, a part or all of fats and oils in an oily food can be replaced with fats and oils comprising 98 to 60% by weight of fat-and-oil (a) which contains 65% by weight or more of POP component, and 2 to 40% by weight of fat-and-oil (b) which contains 45% by weight or more of StOO component.

The replacement rate with the fats and oils comprising fat-and-oil (a) and fat-and-oil (b) is generally at least 30% or more and, in many cases, 40% or more of total fats and oils contained in an oily food. When POP + StOO is less than 30% by weight or StOO is less than 3% by weight, which fat-and-oil composition range may be often present in conventional oily foods, deterioration in texture of meltability in mouth and snap feeling with time, and generation and increase with time of chewy feeling cannot be avoided. When the StOO/POP weight ratio exceeds 0.5, slimy texture is generated.

St is stearic acid, having 18 carbon atoms.

As far as the fat-and-oil (a) and the fat-and-oil (b) have the above-defined range of TG composition, origins of them are not particularly limited, and fats and oils which have been conventionally used as raw material oil for oily foods may be used. For the fat-and-oil (a), the POP content can be increased by fractionation or the like of vegetable fats and oils which contain 65% by weight or more of POP component, such as palm oil and Chinese tallow tree. For the fat-and-oil (b), the StOO content can be increased by an appropriate processing treatment such as enzymatic interesterification or fractionation of fats and oils such as shea butter, sal fat, illipe butter, mango butter, safflower oil, sunflower oil, soy bean oil and rapeseed oil, followed by single use or combination use of the resulting fats and oils.

There is prior art that comprises a combination of symmetric TG's having an unsaturated fatty acid (referred to as U) at the 2-position and saturated fatty acids (referred to as S) at the 1,3-positions, SUS-type, and asymmetric TG's having unsaturated fatty acids at the 1(3),2-positions and a saturated fatty acid at the 3(1)-position, SUU-type. However, only a specific combination of POP + StOO has the effects of lessening softening in chewing, and increase in chewy texture like long-lasting sticky texture in the oral cavity, and sustaining hardness in chewing and favorable texture of meltability in mouth over a long period of time, which are the objects of the present invention.

As for other combinations of SUS + SUU, first, in the case of POP + POO, stabilization of a crystal is slow and POO inhibits crystal structure formation of POP. As a result of redundant crystallization, the crystal of POP + POO becomes a crystal system incorporating other TG crystals which has many defects. Further, since the high melting point TG's form separated and coarse crystals with time through the medium of the low melting point TG's, meltability in mouth of an oily food containing POP + POO deteriorates with time, and therefore the improving effect of POP + POO is poor.

Addition of a large amount of TG's mainly comprising StOSt brings a result contrary to good meltability in mouth to which the present invention attaches importance in oily confectionary as an object of the present invention. Moreover, in the case of StOSt + StOO, crystallization is delayed and a change with time is big. In the case of StOSt + POO, a change with time is small, but it has originally poor meltability in mouth and therefore useless.

A process for producing an oily food is not particularly limited except that the fat-and-oil composition of the final product is within the aforementioned range or the fat-and-oil (a) and the fat-and-oil (b) are used in the defined ranges. An oily food can be produced according to a conventional method.

In this way, the present invention can produce an oily food which can lessen softening in chewing and increase in chewy texture like long-lasting sticky feel in the oral cavity which are generated during storage, and can sustain hardness in chewing and favorable texture of meltability in mouth over a long period of time, and to which the above functions are imparted by a convenient process.

### Examples

Examples of the present invention will be described below and the present invention will be illustrated in more detail, but the present invention is not limited to the following Examples. In Examples, % and part are based on weight.

### <Example 1, Example 2, Example 3, Comparative Example 1, Comparative Example 2>

Cacao mass, whole milk powder, powder sugar, cocoa butter, and fat-and-oil (a) + fat-and-oil (b) are blended according to Table 1 to prepare raw material chocolates according to a conventional method.

The fat-and-oil (a) was a fat-and-oil obtained by fractionating palm oil to increase the POP concentration. The fat-and-oil (b) was a fat-and-oil obtained by interesterifying a high oleic sunflower oil and a stearic acid ester with a 1,3-position-specific lipase to introduce stearic acid at the 1- or 3-position of TG's, and then fractionating the resulting oil to increase the StOO content to 50%. Table 2 shows representative TG compositions of the fat-and-oil (a) and the fat-and-oil (b).

**[Table 1]**

| | blending A |
|---|---|
| Cacao mass | 12.0 |
| Whole milk powder | 18.0 |
| Powder sugar | 35.0 |
| Cocoa butter | 12.0 |
| Fat-and-oil (a)+(b) | 23.0 |
| Lecithin | 0.4 |
| Flavor | Sufficient quantity |

**[Table 2]**

| | PLP | OOO | StLO | POO | PLSt | POP | StOO | StLSt | POSt | StOSt |
|---|---|---|---|---|---|---|---|---|---|---|
| Fat-and-oil (a) | 4.0 | 0.4 | | 1.3 | | 71.2 | 0.1 | | 15.6 | 2.1 |
| Fat-and-oil (b) | | 8.1 | 12.2 | 4.4 | 1.7 | 0.3 | 50.7 | 4.5 | 2.6 | 3.3 |

The blending ratios of the fat-and-oil (a)/the fat-and-oil (b) in the above blending were 85/15 in Example 1, 65/35 in Example 2, 60/40 in Example 3, 100/0 in Comparative Example 1, and 50/50 in Comparative Example 2.

Chocolates were prepared according to the blending ratios of Table 1 and Table 3 by a conventional method. The texture of the prepared chocolates was confirmed after aging at 20°C for 1 week and then after a cycle test of 4 cycles/day at 18°C to 27°C (the temperature is increased by 9°C over 1 hour) x 4 days, thereby changes in texture with time were assessed.

The blending ratios of the fat-and-oil (a) and the fat-and-oil (b), and assessment of texture are shown in Table 3.

**[Table 3]**

| | Comparative Example 1 | Example 1 | Example 2 | Example 3 | Comparative Example 2 |
|---|---|---|---|---|---|
| Fat-and-oil (a) | 100 | 85 | 65 | 60 | 50 |
| Fat-and-oil (b) | 0 | 15 | 35 | 40 | 50 |
| POP | 43.4 | 38.1 | 30.9 | 29.2 | 25.6 |
| StOO | 2.3 | 6.1 | 11.2 | 12.5 | 15.0 |
| StOO/POP | 0.05 | 0.16 | 0.36 | 0.43 | 0.59 |
| Assessment | x | ○ | ○ | Δ | x |

| | | | | | |
|---|---|---|---|---|---|
| *An assessment method was organoleptic assessment of changes in texture by 10 panelists. Assessment criteria are as follows: ○: A change in texture between before and after the cycle test is small. Hardness in chewing is retained, and meltability in mouth is good: Δ: There is a slight change in texture between before and after the cycle test and slight softening in chewing is felt, but meltability in mouth is good, and commercial value is recognized. x: Textures before and after the cycle test are clearly different, and the chocolate is soft in chewing and has chewy texture. | | | | | |

In Example 1 and Example 2, a change in texture between before and after the cycle test was small, hardness in chewing was retained, and meltability in mouth was good. In Example 3, slight changes in texture and chewing were felt, but they were in such an extent that commercial value is sufficiently recognized. However, in Comparative Example 1 and Comparative Example 2, changes in texture and chewing were remarkable in the cycle test, and commercial value was low.

A relationship between the weight % of POP and StOO in Example 1, Example 2, Example 3, Comparative Example 1 and Comparative Example 2 is shown in Fig.1.

### <Example 4, Example 5, Example 6, Comparative Example 3, Comparative Example 4>

After {fat-and-oil (a) + fat-and-oil (b)} are blended according to Table 5, a part of {fat-and-oil (a) + fat-and-oil (b)} is blended with powder sugar in the blending of Table 4 so as to attain an oil content of 24%, followed by warming and kneading. The mixture is ground with a roll refiner ("Three-roll mill SDY-300", manufactured by Buhler Inc.) using such conditions that a particle size becomes about 20 µm to obtain roll flakes. All the remaining of {fat-and-oil (a) + fat-and-oil (b)} and the roll flakes are kneaded with a conching machine (conche) while warming to obtain an oily food.

**[Table 4]**

| | blending D |
|---|---|
| Powder sugar | 60.0 |
| Fat-and-oil (a)+(b) | 40.0 |
| Lecithin | 0.4 |
| Flavor | Sufficient quantity |

The blending ratios of the fat-and-oil (a)/the fat-and-oil (b) in the above blending were 85/15 in Example 4, 65/35 in Example 5, 60/40 in Example 6, 100/0 in Comparative Example 3, and 50/50 in Comparative Example 4.

Oily foods were prepared according to according to the blending ratios of Table 1 and Table 2 by a conventional method. The texture of the prepared oily foods was confirmed after aging at 20°C for 1 week, and then after a cycle test of 4 cycles/day at 18°C to 27°C x 4 days, thereby changes in texture with time were assessed, as described in Example 1.

The blending ratios of the fat-and-oil (a) and the fat-and-oil (b), and assessment of texture are shown in Table 5.

**[Table 5]**

| | Comparative Example 3 | Example 4 | Example 5 | Example 6 | Comparative Example 4 |
|---|---|---|---|---|---|
| Fat-and-oil (a) | 100 | 85 | 65 | 60 | 50 |
| Fat-and-oil (b) | 0 | 15 | 35 | 40 | 50 |
| POP | 71.2 | 60.6 | 46.4 | 42.8 | 35.8 |
| StOO | 0.1 | 7.7 | 17.8 | 20.3 | 25.4 |
| StOO/POP | 0.00 | 0.13 | 0.38 | 0.47 | 0.71 |
| Assessment | x | ○ | ○ | Δ | x |

| | | | | | |
|---|---|---|---|---|---|
| * An assessment method is the same as that of Example 1. | | | | | |

In Example 4 and Example 5, a change in texture between before and after the cycle test was small, hardness in chewing was retained, and meltability in mouth was good. In Example 6, slight changes in texture and chewing were felt, but they were in such an extent that commercial value is sufficiently recognized. However, in Comparative Example 3 and Comparative Example 4, changes in texture and chewing were remarkable in the cycle test, and commercial value was low.

### <Example 7, Comparative Example 5, Comparative Example 6, Comparative Example 7, Comparative Example 8, Comparative Example 9>

Cacao mass, whole powder milk, powder sugar, cocoa butter, and a test fat-and-oil are blended according to Table 6 to prepare raw material chocolates according to a conventional method.

The blending ratios of test fats-and-oils are shown in Table 7. The high StOO fat in Example 7 is the same as the fat-and-oil (b) used in Example 1.

"Palm superolein (iodine value 68, palm olein)" is a fat-and-oil obtained by fractionating palm oil to lower the melting point, and contains POO: 35%, POL (L: linoleic acid, 16 carbon atoms, and an unsaturation degree of 2): 16%, and PLP/POP: around 10%.

"High oleic sunflower oil" is a sunflower oil containing a high proportion of oleic acid, and the proportion of triolein (OOO) amounts to 70%.

Refined soybean oil contains 25% of oleic acid and 54% of linoleic acid. Rapeseed oil contains 59% of oleic acid and 23% of linoleic acid. Rice bran oil (rice salad oil) contains 42% of oleic acid and 36% of linoleic acid, but contains a large amount (about 3%) of unsaponified substances.

**[Table 6]**

| | blending A |
|---|---|
| Cacao mass | 12.0 |
| Whole powder milk | 18.0 |
| Powder sugar | 35.0 |
| Cocoa butter | 12.0 |
| Test fat-and-oil | 23.0 |
| Lecithin | 0.4 |
| Flavor | Sufficient quantity |

**[Table 7]**

| | Example 7 | Comparative Example 5 | Comparative Example 6 | Comparative Example 7 | Comparative Example 8 | Comparative Example 9 |
|---|---|---|---|---|---|---|
| (a) Fat or oil | 62.0 | 62.0 | 62.0 | 62.0 | 62.0 | 62.0 |
| High StOO fat | 38.0 | | | | | |
| Palm Superolein | | 38.0 | | | | |
| High Oleic Sunflower Oil | | | 38.0 | | | |
| Soybean oil | | | | 38.0 | | |
| Rapeseed oil | | | | | 38.0 | |
| Rice bran oil | | | | | | 38.0 |
| Assessment | ○ | x | x | x | x | x |

| | | | | | | |
|---|---|---|---|---|---|---|
| *An assessment method is the same as that of Example 1. | | | | | | |

In Example 7, Comparative Example 5, Comparative Example 6, Comparative Example 7, Comparative Example 8, and Comparative Example 9, the same ratio of fat-and oil /fat-and-oil (b) = 62/38 was used. As fat-and-oil (b), high StOO fat was used in Example 7, palm superolein was used in Comparative Example 5, high oleic sunflower oil was used in Comparative Example 6, soybean oil was used in Comparative Example 7, rapeseed oil was used in Comparative Example 8, and rice bran oil was used in Comparative Example 9.

Oily foods were prepared according to the blending ratios of Table 6 and Table 7 by a conventional method. The texture of the prepared oily foods was confirmed after aging at 20°C for 1 week, and then after a cycle test of 4 cycles/day at 18°C to 27°C x 4 days, thereby changes in texture with time were assessed, as described in Example 1. The results are shown in Table 7.

In Example 7, a change in texture between before and after the cycle test was small, hardness in chewing was retained, and meltability in mouth was good.

In Comparative Example 5, Comparative Example 6, Comparative Example 7, Comparative Example 8 and Comparative Example 9, changes in texture and chewing in the cycle test were remarkable, and commercial value was low.

A relationship between the weight % of POP and StOO in Example 4, Example 5, Example 6, Comparative Example 3 and Comparative Example 4 is shown in Fig. 1.

### Industrial Applicability

According to the present invention, an oily food which can lessen softening in chewing and increase in chewy texture like long-lasting sticky feel in the oral cavity which are generated during storage, and can sustain hardness in chewing and favorable texture of meltability in mouth over a long period of time, and to which the above functions are imparted by a convenient process, can be produced.

## Claims

1. An oily food having such a fat-and-oil composition that POP + StOO is not less than 30% by weight, and StOO is not less than 3% by weight based on total fats and oils contained in the food, whose StOO/POP weight ratio is not more than 0.5, wherein POP is 1,3-dipalmitoyl-2-oleoylglycerin and St refus to stearic acid.

2. The oily food according to claim 1, wherein the oily food is chocolate or a fat-and-oil utilizing food.

3. A process for producing the oily food according to claim 1, which comprises replacing a part or all of fats and oils in the food with fats and oils comprising 98 to 60% by weight of fat-and-oil (a) which contains not less than 65% by weight of POP component, and 2 to 40% by weight of fat-and-oil (b) which contains not less than 45% by weight of StOO component, wherein POP is 1,3-dipalmitoyl-2-oleoylglycerin and St refus to stearic acid.

## Patentansprüche

1. Öliges Nahrungsmittel mit einer derartigen Fett-und-Öl-Zusammensetzung, dass POP + StOO nicht weniger als 30 Gewichtsprozent betragen, und StOO nicht weniger als 3 Gewichtsprozent beträgt, basierend auf dem gesamten Fett- und Ölgehalt in dem Nahrungsmittel, dessen StOO/POP Gewichtsverhältnis nicht mehr als 0,5 beträgt, wobei POP 1,3-dipalmitoyl-2-oleoylglycerin ist und sich St auf Stearinsäure bezieht.

2. Öliges Nahrungsmittel nach Anspruch 1, wobei das ölige Nahrungsmittel Schokolade oder ein Fett-und-Öl verwendendes Nahrungsmittel ist.

3. Verfahren zur Herstellung des öligen Nahrungsmittels nach Anspruch 1, welches den Austausch eines Teils oder des ganzen Fett- und Ölgehalts in dem Nahrungsmittel durch Fette und Öle aufweist, die 98 bis 60 Gewichtsprozent von Fett-und-Öl (a) aufweisen, das nicht weniger als 65 Gewichtsprozent an POP-Komponente aufweist, und 2 bis 40 Gewichtsprozent an Fett-und-Öl (b), das nicht weniger als 45 Gewichtsprozent an StOO-Komponente aufweist, wobei POP 1,3-dipalmitoyl-2-oleoylglycerin ist und sich St auf Stearinsäure bezieht.

## Revendications

1. Aliment gras ayant une composition de graisse et d'huile telle que POP + StOO n'est pas inférieur à 30% en poids et StOO n'est pas inférieur à 3% en poids basé sur les graisses et huiles totales se trouvant dans l'aliment, dont le rapport pondéral de StOO/POP n'est pas supérieur à 0,5, où POP est 1,3-dipalmitoyl-2-oléoylglycérine, et St se réfère à l'acide stéarique.

2. Aliment gras selon la revendication 1, où l'aliment gras est du chocolat ou un aliment utilisant de la graisse et de l'huile.

3. Procédé de production de l'aliment gras selon la revendication 1, qui comprend le remplacement d'une partie ou de l'ensemble des graisses et d'huiles dans l'aliment par des graisses et d'huiles comprenant 98 à 60% en poids de graisses et d'huiles (a) qui ne contient pas moins que 65% en poids du composant POP, et 2 à 40% en poids de graisses et huiles (b) qui contient pas moins que 45% en poids du composant StOO, où POP est 1,3-dipalmitoyl-2-oléoylglycérine et St se réfère à l'acide stéarique.
